(19)

Europäisches
Patentamt

European
Patent Office

Office européen
des brevets

(11) **EP 4 510 034 A1**

(12) **EUROPEAN PATENT APPLICATION**

(43) Date of publication:
**19.02.2025  Bulletin 2025/08**

(21) Application number: **24191204.7**

(22) Date of filing: **26.07.2024**

(51) International Patent Classification (IPC):
**G06F 30/23** (2020.01)     **G06F 30/27** (2020.01)
**G06F 30/28** (2020.01)     **G06N 3/04** (2023.01)
**G05B 13/04** (2006.01)     **G06N 3/08** (2023.01)
**B64F 5/60** (2017.01)      **G05B 13/02** (2006.01)
**G06F 113/08** (2020.01)

(52) Cooperative Patent Classification (CPC):
**G06F 30/23; G06F 30/27; G06F 30/28; G06N 3/04;
G06N 3/045; G06N 3/08;** B64F 5/60; G06F 30/15;
G06F 2113/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023  GB 202312389
12.04.2024  GB 202405242**

(71) Applicant: **Rolls-Royce plc
London N1 9FX (GB)**

(72) Inventors:
• **Loh, Jessica Sher En
Derby DE24 8BJ (GB)**

• **Arafat, Naheed Anjum
Derby DE24 8BJ (GB)**
• **Kong, Wai Kin Adams
Derby DE24 8BJ (GB)**
• **Chan, Wai Lee
Derby DE24 8BJ (GB)**
• **Conduit, Bryce D
Derby DE24 8BJ (GB)**
• **Lim, Wei Xan
Derby DE24 8BJ (GB)**
• **Oo, Thant Zin
Derby DE24 8BJ (GB)**

(74) Representative: **Rolls-Royce plc
Moor Lane (ML-9)
PO Box 31
Derby DE24 8BJ (GB)**

(54) **FLUID FLOW SIMULATION**

(57)    A method of using a computer implemented neural network for a simulation of aerodynamic performance of a technical object having a geometry, the method comprising:

Training the neural network using a plurality of sets of encodings of pre-computed computational fluid dynamics, CFD, outputs, wherein the training is generated using inputs comprising:

a geometry of at least one training technical object;

spatial locations of input nodes of the neural network as node attributes;

a relationship between the geometry of the at least one training technical object and the neural network input node locations;

associated boundary conditions;

operating conditions; and

computed outputs comprising flow fields and aerodynamic performance parameters;

the training using a loss function that evaluates an error between a neural network output and the pre-computed CFD outputs to produce a trained neural network;

using the trained neural network with new inputs to generate as output a predicted aerodynamic performance of the technical object, wherein the relationship between the geometry of the at least one training technical object and the neural network input node locations comprises a vector with at least two parameters.

*FIG. 5A*          *FIG. 5B*

**Description**

**FIELD**

This disclosure relates to simulation of fluid flow with neural networks during the design of aerodynamic components.

**BACKGROUND**

Gas turbine engines are highly optimised machines for which obtaining a small increase in efficiency on one engine design can lead to significant reductions in fuel use, for example in power generation or aero applications, due to the long operating hours of these engines. Improving the design of the aerodynamic components within gas turbine engines is a complex technical process. Understanding the performance of these components is also critical to fault diagnosis and setting limits on operation.

Computational Fluid Dynamics (CFD) is an essential tool used to model aerodynamic behaviour during design of aerodynamic components such as those found in turbomachinery. The flows encountered in turbines are three-dimensional, viscous, turbulent, and may be transonic. The only way to understand the behaviour of flow within a gas turbine is using modelling techniques, to reveal effects of flow through turbine blades. As will be self-evident, aerodynamic behaviour within an operating gas turbine is extremely difficult to observe in operation due to the high temperatures, pressures and velocities present in the engine. To physically test an adjustment to a turbine or compressor blade under a range of operating conditions would require assembling a complete prototype gas turbine engine, with all parts adjusted to the change under test, and operating the engine under all operating conditions. Building a prototype engine and operating it in a test rig is a complex technical task that may take many years of planning. After operating the engine in a test rig, a further stage of flight tests needs to be carried out before the engine is declared airworthy. However, none of this testing can provide full information on the actual aerodynamic behaviour of the internal components other than can be inferred from noise, vibration or efficiency. Some aerodynamic effects would not even be discoverable using a full prototype, and might not be recognised until thousands of hours of flight performance have been logged, leading to potential engine failure.

Therefore modelling is essential before building a prototype, to optimise the design of the aerodynamic components of the engine for the operating conditions that a prototype will be used to test.

The ability to model the performance effects of some changes using CFD reduces the need to build prototypes, saving months or even years of work, but even CFD models can take days or weeks to complete. As there are multiple design parameters needed to describe for example a single turbine blade, multiple CFD runs are required to optimise each parameter.

Neural networks utilise a plurality of connected nodes to map some input to an output. They are often used in a machine learning context, whereby they are trained to map some input training data to corresponding output data, typically in vector form. Optimisation is achieved by minimising the error between the training data and the output of the network. In some circumstances it is possible to reduce the error to zero. Recently, different types of neural networks have been used to predict the output of computational fluid dynamics (CFD) simulations in order to speed up and optimise the design of aerodynamic components. However these vary in reliability and speed and often require careful adaptation of training data to give meaningful results.

Florent Bonnet, Jocelyn Ahmed Mazari, Paola Cinnella and Patrick Gallinari in "AirfRANS: High Fidelity Computational Fluid Dynamics Dataset for Approximating Reynolds-Averaged Navier-Stokes Solutions", NeurIPS 2022 [AirFRANS] compare the output of some different neural networks trained using a common dataset of CFD data, using the Euclidean distance function between the node and an airfoil.

Junfeng Chen, Elie Hachem, and Jonathan Viquerat, in Graph neural networks for laminar flow prediction around random two-dimensional shapes. Physics of Fluids, 33(12):123607, 2021, [Chen-GCNN] describe a GCNN model trained over a data set composed of CFD-computed laminar flows around 2,000 random 2D shapes.

Filipe De Avila Belbute-Peres, Thomas Economon, and Zico Kolter. "Combining differentiable PDE solvers and graph neural networks for fluid flow prediction", International Conference on Machine Learning, pages 2402-2411. ICML 2020, [CFDGCN] describes using a CFD simulator in the training and testing scheme to generate low-resolution data and vanilla graph convolution to enhance learning on a high-resolution mesh with varying initial physical conditions, e.g., angle of attack and Mach number. Although CFDGCN generalises well to unknown physical conditions, it requires the geometry to remain fixed for the purpose of optimising the coarse mesh.

An improvement to the training methods and algorithms used in the neural networks for CFD is highly desirable as it will lead directly to a more rapid and optimised design process for technical components, which can lead directly to an improvement of performance of aerodynamic machines, such as gas turbine engines. This in turn will lead to lower energy use, less noise, less pollution and lower cost of transport.

## SUMMARY

The invention in its various aspects is as defined in the appended claims.

The invention is directed towards designing aerodynamic components using computational fluid dynamic simulations implemented using a neural network. The invention is directed towards methods, instructions, computer-readable media and apparatus for simulating fluid flow through a domain around an object geometry subject to a set of boundary conditions, in which a neural network is utilised. The invention is also directed towards methods, instructions and computer-readable media for training such neural networks.

An aspect of the invention provides a method of using a computer implemented neural network for a simulation of aerodynamic performance of a technical object having a geometry, the method comprising:

> training the neural network using a plurality of sets of encodings of pre-computed computational fluid dynamics, CFD, outputs, wherein the training is generated using inputs comprising:

>> a geometry of at least one training technical object;
>> spatial locations of input nodes of the neural network as node attributes;
>> a relationship between the geometry of the at least one training technical object and the neural network input node locations;
>> associated boundary conditions;
>> operating conditions; and
>> pre-computed CFD outputs comprising flow fields and aerodynamic performance parameters;

> the training using a loss function that evaluates an error between a neural network output and the pre-computed CFD outputs to produce a trained neural network;
> using the trained neural network with new inputs to generate as output a predicted aerodynamic performance of the technical object,
> wherein the relationship between the geometry of the at least one training technical object and the neural network input node locations comprises a vector with at least two parameters.

Using the trained neural network with new simulation inputs to output the predicted aerodynamic performance of the technical object may comprise:

> providing a plurality of sets of new simulation inputs to the neural network and outputting from the neural network the predicted aerodynamic performance of the technical object for each set of new simulation inputs;
> selecting the set of new simulation inputs that leads to predicted aerodynamic performance parameters that meet a threshold;
> deriving parameters from the simulation inputs to use in the design or operation of the technical object.

The method may include using the selected set of new simulation inputs as design parameters in manufacturing the technical object.

Preferably, the new simulation inputs to the neural network comprise a fixed geometry of the technical object with varying operating conditions, and the method further comprises using the selected set of new simulation inputs to generate operational limits for a technical object having the same geometry when in use.

The relationship between the geometry of the at least one training technical object and the neural network input node locations may comprise a geometric vector that represents both distance and direction between the spatial location of an input node and a closest point on the geometry of the technical object.

Alternatively, the relationship between the geometry of the at least one training technical object and the neural network input node locations may comprise a vector representing parameters of a parametric equation that defines an approximation to the surface of the technical object.

Optionally, the relationship between the geometry of the at least one training technical object and the neural network input node locations may comprise a directional integrated distance between an input node of the neural network and the geometry of the technical object, wherein the directional integrated distance for each node comprises a plurality of values of a shortest distance between the input node location and a closest point on the geometry of the technical object in an angular range.

The neural network may be a graph neural network associated with a mesh having a plurality of cells such that the input nodes are associated with positions of the cells, wherein the mesh having been generated using a meshing tool to divide a space around the at least one training technical object into finite volumes, and wherein the relationship between the geometry of the at least one training technical object and the mesh may comprise characteristics of the mesh cells associated with each input node. The characteristics of the mesh cells may comprise one or more of: volumes, face surface area vectors, and face centroids of the mesh cells.

Volumes of the mesh cells may be provided to the graph neural network as node attributes while face surface area vectors and face centroids of the mesh cells may be provided to the graph neural network as edge attributes, such that at least one filter in each input node can be adjusted based on the cell characteristics.

The aerodynamic performance may comprise one or more of: a coefficient of drag, a coefficient of lift, a stall range and a pressure loss. Using a loss function during training may also comprise: training the network to minimise a residual loss $L_r = \mathcal{L}(F_{GT}, \hat{F}_r + \text{Upsample}(F_{LR}))$, where $F_{GT}$ is a corresponding ground truth, $\mathcal{L}$ is an arbitrary loss criterion, $\hat{F}_r$ is a predicted residual between a predicted flow variable and Upsample ($F_{LR}$), an upsampled, low resolution field.

New simulation inputs may comprise one or more of: a new geometry; new boundary conditions; new operating conditions.

The method can be adapted when the new geometry comprises the geometry of at least two technical objects having a geometric separation from each other, wherein training the neural network includes using a plurality of sets of encodings of pre-computed CFD outputs, each based on more than one training technical objects having a respective training geometric separation from each other, and wherein using a loss function that evaluates an error between the neural network output and the pre-computed CFD outputs includes:

> generating a plurality of first initial estimates of a flow field using existing flow data for each of the training technical objects, and combining the existing flow data based on the respective training geometric separation;
> calculating a plurality of residual fields between the initial estimates and the CFD outputs; and
> evaluating an error between the neural network output and the residual fields to produce a trained neural network;

and wherein using the trained neural network with new simulation inputs to generate as output predicted aerodynamic performances of the at least two technical objects further includes:

> generating a second initial estimate of a flow field using existing flow data for each of the at least two technical objects, and combining the existing flow data based on the geometric separation between them;
> using the trained neural network to predict a predicted residual field; and
> combining the predicted residual field with the second initial estimate to generate the predicted aerodynamic performances of the at least two technical objects.

The method for multiple objects may be provided by the neural network comprising a plurality of neural networks, and the method further comprising:

> during the training, splitting the residual fields into a plurality of domains, each domain having an overlap region with at least one other domain;
> training a separate neural network of the plurality of neural networks using the residual fields for each domain;

and wherein using the trained neural network with new simulation inputs to generate as output predicted aerodynamic performances of the at least two technical objects further includes:

> generating a third initial estimate of a flow field using existing flow data for each of the at least two technical objects, and combining the existing flow data based on the geometric separation between them;
> using the trained neural network to predict a predicted residual field for each of the plurality of domains; and
> combining the predicted residual field for each of the plurality of domains with the third initial estimate to generate predicted aerodynamic performances of the at least two technical objects.

An aspect of the invention may be providing a computer-readable medium having computer-executable instructions encoded thereon which, when executed by a computer, cause the computer to perform the method described above.

Another aspect of the invention is a computer-readable medium having stored thereon a neural network produced by the method as disclosed herein.

Another aspect of the invention provides a method of using a computer implemented neural network for a simulation of aerodynamic performance of a technical object having a geometry, the method comprising:

> training the neural network using a plurality of sets of encodings of pre-computed computational fluid dynamics, CFD, outputs, generated using inputs comprising:

a geometry of at least one training technical object;
spatial locations of input nodes of the neural network as node attributes;
a relationship between the geometry of the at least one training technical object and the neural network input node locations;
associated boundary conditions;
operating conditions; and
computed outputs comprising flow fields and aerodynamic performance parameters;

the training using a loss function that evaluates an error between a neural network output and the pre-computed CFD outputs to produce a trained neural network;
using the trained neural network with new inputs to generate as output a predicted aerodynamic performance of the technical object,
wherein the relationship between the geometry of the at least one training technical object and the neural network input node locations comprises a vector with at least two parameters.

## BRIEF DESCRIPTION OF THE DRAWINGS

Embodiments will now be described by way of example only with reference to the accompanying drawings, which are purely schematic and not to scale, and in which:

FIG. 1: shows a process for creating a trained neural network and the use thereof for making predictions;
FIG. 2: shows different approaches to representing a mesh.
FIG. 3: Illustration of three geometry representations.
FIG. 4: Illustration of the computation of DID.
FIG. 5: (a) CFD mesh with an airfoil body surrounded by different sizes of cells. (b) Illustration of cell characteristics.
FIG. 6: Flowchart of method using trained neural network.
FIG. 7: graphical comparison of output results.
FIG. 8: example of conversion of geometry to parametric equation.
FIG. 9 to FIG. 13 are flowcharts of the method of training and using the trained neural network for multiple object geometries.

## DETAILED DESCRIPTION

Creating a Trained Neural Network

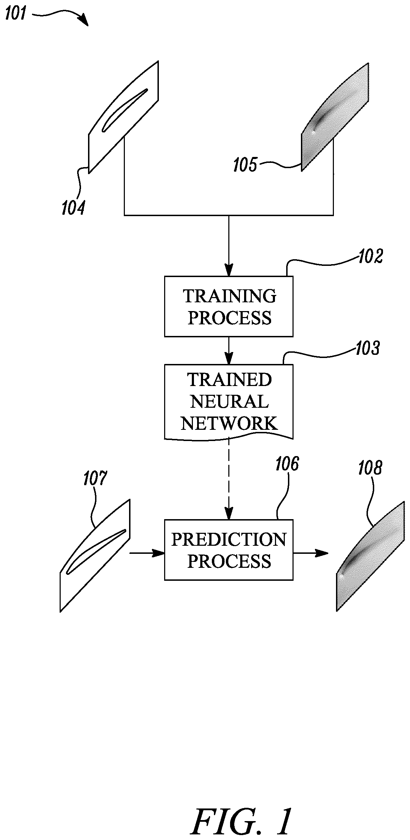

An overview of the process for creating a trained neural network and the use thereof is shown in FIG. 1.
First, training data 101 is provided to a training process 102 to produce a trained neural network 103. In this example, the training data 101 comprises a set of exemplar input object geometries 104 bounded within a domain and having boundary conditions associated therewith. As used herein, the term object geometry refers to the shape or configuration of an object, however so represented in terms of data structure. For example, the object may be stored as a polygon mesh, as a signed distance field, as an implicit function or as a point cloud, or any other way of defining the shape or configuration of an object. The object geometry represents a real-world item such as an aerofoil or another aerodynamic component where aerodynamic performance is a requirement. The aerofoil may be for example a component of turbomachinery such as a turbine blade, a nozzle, a compressor blade or a vane.
In the present embodiment, the exemplar input object geometries 104 are of the type typically used with conventional computational fluid dynamics (CFD) codes and methods. Accompanying the exemplar input object geometries 104 are a set of pre-computed CFD simulations 105 corresponding to a subset of the exemplar input object geometries 104. In the present embodiment, the pre-computed CFD simulations 105 are pre-computed by performing a conventional CFD run on a subset of the input object geometries 104 using the corresponding domain and boundary condition definitions associated therewith. Thus, the training data represents technical objects defined by their geometry, and their aerodynamic performance which can be derived from the CFD simulation data.
In operation, the training process 102 uses the training data 101 to produce the neural network 103 for use in the simulation of the fluid flow through a domain around an object geometry. This process will be described further below. The method of training described below leads to an increase in training speed and improves the accuracy of the results.
Once the training process 102 is complete, the trained neural network 103 may be disseminated for use in a prediction process 106, whereby a novel input object geometry 107, again bounded within a domain and having boundary conditions associated therewith, is processed to produce an output 108.
It will be appreciated that conventional CFD processing to produce for example the set of pre-computed CFD simulations 105 is highly computationally intensive, with runs often taking hours or even days even on high performance computing clusters.

When designing a technical object where the aerodynamic performance of the object will be affected by its geometry, such as an aerofoil, the geometry must be optimised to maximise aerodynamic performance under the conditions in which it will be used after manufacture. For example, a gas turbine engine may contain multiple such technical objects as components, for example various stages of compressor blades, nozzles, turbine blades and vanes, and may drive fan blades as well. A subset of these components may be used in other types of turbine or compressor, such as a gas compressor, turbocharger or a steam turbine. The geometry of these components may be described by multiple parameters, for example an aerofoil might be described using parameters such as pitch, chord length, sweep, thickness, maximum thickness, maximum camber, position of max thickness, position of max camber, and nose radius. The operating conditions will also vary depending on the use that the gas turbine is put to. While these techniques can be applied to any type of aerofoil, they are particularly useful for gas turbine engines where each component may be subject to different temperatures, flow rates, density, gas composition etc., and where it is difficult to mechanically test these conditions outside of an operating engine. Each component must be optimised for the intended end use and multiple simulations must be run to predict performance under intended operating conditions. For an aeronautical gas turbine engine, the operating conditions may include startup, climb, cruise, descent, in different ambient conditions including air temperatures that range from -60°C to +55°C. Engines may also be designed to run on a range of different fuels.

While optimising the geometry of an aerofoil by altering the geometry is one aim of the present disclosure, it can also be used to model the performance of a selected aerofoil geometry under all the different operating conditions it may experience and be used to generate operational limits to enable an engine containing the aerofoils to be used safely. These operational limits may be included in a control system to prevent the aerofoil being operated beyond its safe capability.

For example, a gas turbine engine may have a maximum thrust that can be safely used during climb and exceeding this may have different effects on different engine components. The choice of thrust operating condition will affect the pressure, temperature and velocity of the gas flows in the engine, as well as the RPM, and these can be converted into input conditions to the simulation. For a given geometry, predictions can be made of the performance of a component under the different input conditions and operating limits can be derived when the performance exceeds or fails to meet a threshold. These operating limits can then be used in a final product to create an alert when the operating conditions would lead to exceeding the operating limit or to limit control settings to prevent exceeding the limit.

The aerofoils being modelled need not be novel - the modelling may be used to predict the performance of existing aerofoil designs under new operating conditions, for example operating an existing gas turbine engine using a different fuel such as hydrogen. This allows the modelling to be used to select existing aerofoils to use to manufacture a new gas turbine engine, or to set operation limits.

The prediction method described may output for example lift and drag for a blade, and these can be translated into the stress applied to the blade in use under different conditions, and then used to predict the resultant deterioration of a blade such as blade creep, and used to bring forward maintenance schedules based on the operating conditions an engine has been used under. For example an aero engine may have exceeded operating limits during use, for example due to an emergency manoeuvre, and an alert may be generated by an engine management system to inform maintenance engineers that an out of schedule inspection of a component is required. Although these techniques can be carried out using CFD, a faster method of simulation enables multiple parameters to be simulated rapidly within the restricted time available for new product development. One effect of a faster simulation method is a reduction in the time and energy required for computing, running a conventional CFD simulation requires a large amount of computing power and weeks or months of time. As well as slowing down the production of CFD results and therefore slowing down the design process, it also consumes large amounts of energy and resource which can be avoided by using a neural network technique such as disclosed herein that needs less computing power. In addition to the more rapid design process itself, there is therefore an additional benefit of reduced resource consumption.

Graph Neural Network (GNN) is a class of artificial neural networks for processing data that can be represented as graphs, i.e. as set of vertices (also called nodes or points) together with edges that represent the links between pairs of nodes. Graph nodes iteratively update their representations by exchanging information with their neighbours. These can be used to learn CFD as the edges represent the relationships between mesh cells, the cells in CFD which are associated with the flow and pressure fields for example. This data helps represent the geometric relationship between nodes, which allows a neural network to represent a 2D or 3D space.

A Convolutional Neural Network (CNN) is a class of artificial neural network commonly applied to analyze visual imagery. CNNs use a mathematical operation called convolution in place of general matrix multiplication in at least one of their layers.

In this disclosure Finite Volume Graph Convolution (FVGC) is described where finite volume features (FVF), derived from computational fluid dynamics (CFD) mesh data, are applied to the convolution of a graph neural network, so as to improve the learning function of the neural network when applied to CFD derived data. Accordingly, the invention disclosed herein may be described as a graph convolutional neural network GCNN.

In this disclosure, the inputs to the nodes of the input layer of the neural network include geometric information representing the technical object to be simulated, and the relationship between the geometry of the object and the space around it, derived from mesh data. The data from CFD that represents the flow, pressure and/or energy for example is used as training data by minimising the error between the network output and the CFD data during training. Assuming that any flow variable $f$, such as density, velocity and pressure, can be represented in the CFD model used to train the neural network, these variables can be predicted by the neural network, along with derived parameters such as drag and lift if these are provided as training data.

Shortest Vector is a geometric vector that may be used as an input to the network, indicating where the closest point of the technical object is relative to the defined position of the node. It is a 2D vector in 2D simulation. If the simulation is 3-dimensional, it is a 3-dimensional vector. The vector could be represented by any suitable coordinate system, to supply both distance and direction information as an input to the neural network.

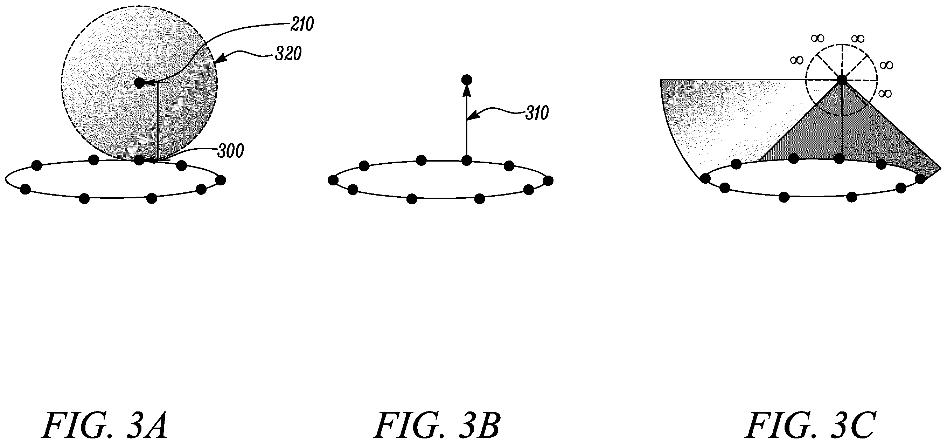

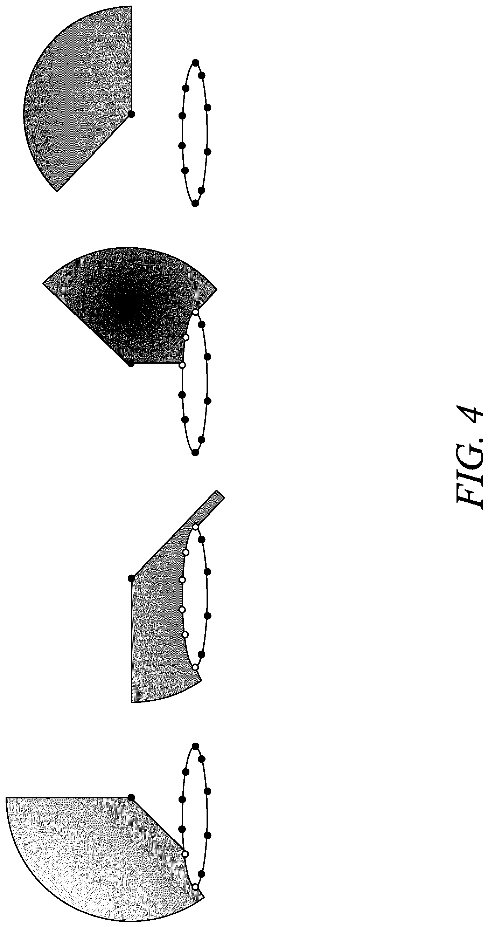

Directional integrated Distance (DID) is defined on an angular range (FIG. 3c and FIG. 4) is a generalisation of SV. DID has different angular segments to handle different directions, and so provides an array of distances representing the nearest point on the object geometry in each angular segment. The angular segments may overlap. The angular segments may together cover the full range of angles, e.g. 2 Pi radians or 360°. The angular segments may also be solid angles, covering directions in three dimensions. As an example, the sphere surrounding a node may be simplified to a dodecahedron, and the DID would therefore have an array of 12 distances representing the nearest point on the object geometry within a cone pointing in each face direction of the dodecahedron.

Face surface area vector relates to the joining faces of the mesh cells and is the area multiplied by the normal vector of the surface, which is used as an input to the graph edges, linking adjacent nodes and including data about the size and direction of the faces connecting mesh cells in the CFD data. The edge data is then used in the convolution function. There is a convention on the direction that the vector points, however for the purpose of the GCN it just needs to be consistently used in both training and prediction.

For each node there is a cell centre which defines the node position. Each face is therefore associated with two cell centres. In an embodiment, for each face, there are two face surface area vectors, which are opposite facing, one for each adjacent cell centre. In the graph representation of the mesh, the face surface area vectors may contribute to the edge parameters, which are used in the convolution function of a graph neural network.

Graph Construction

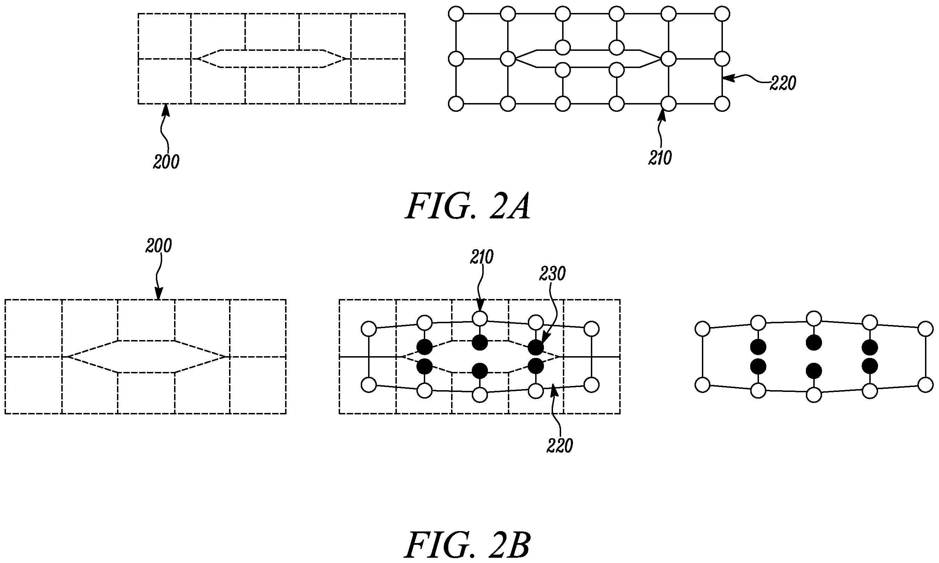

FIG. 2 illustrates two different approaches to representing a CFD mesh using graph features.

In GNN-based CFD methods, both the inputs and outputs of the model may be represented as graphs with nodes and edges. The CFD simulation mesh $M$ (200) is represented as a graph $G = (V,E)$, where $V$ and $E$ represent a set of vertices (nodes) and edges, respectively. There are two methods to do so. Using a 2D CFD mesh for illustration, the first method, as shown in FIG. 2(a), is to directly represent the mesh nodes as graph nodes (white circles 210) $i \in V$, and the faces between them as edges (solid lines 220) $(i,j),(j,i) \in E$. This is known as the *mesh node-based* method, and it has been used previously by researchers including the AirFRANS paper mentioned above in the background section.

An alternate approach disclosed here is the following: the graph node $i \in V$ represents the mesh cell centroid $m_i \in M$, and the bi-directional edge $(i,j),(j,i) \in E$ indicates that cells $i$ and $j$ are adjacent, i.e., share a face. This approach is referred to herein as the *cell centroid-based* method, which is illustrated in FIG. 2 (b). Graph nodes represent either cell centroids (white 210) or boundary face centroids (black 230), and graph edges (220) represent the adjacency of the cell centroids with one another or with boundary faces. This method is key to the use of Finite Volume Features (FVF) as described below. Note that in this method, the centroids of the boundary faces are represented as graph nodes as well, despite not being shared by two cells, to capture flow characteristics at the boundary. This representation allows message-passing from and towards boundary faces to be captured by the edges between these nodes and that of the cell adjacent to the boundary face.

Global Geometry Representations

FIG. 3 illustrates three geometry representations. 3(a) illustrates the signed distance function, where a scalar number is used to represent the distance between a node (210) and the closest point on the geometry boundary (300). 3(b) illustrates the use of a shortest vector (310) instead to represent the distance and direction between a cell centroid node and the nearest boundary point. This vector may be in cartesian coordinates or any other coordinate system, the difference compared to 3(a) is that the neural network receives directional information as an input.

In a steady simulation, a GNN is trained to predict the velocity vector and pressure for each node. To train a GNN to predict target flow characteristics at each node, the current methods encode some features into the input nodes. The most common approaches include variants of the binary representation and the Signed Distance Function (SDF) [AirFRANS]. In binary representations, nodes are given discrete values such as 0 and 1, depending on whether they are on the geometry boundary or not. The SDF, for Convoluted Neural Networks, CNNs, is defined as

$$SDF(x_i) = \min_{x_b \in B} \|x_i - x_b\| \, h(x_i) \qquad (1),$$

where $x_i$ and $x_b$ denote an internal node and its closest boundary node, respectively. $h(x_i)$ is equal to 1, -1, and 0 if $x_i$ is outside, inside, and on the object boundary, respectively. The SDF representation has been shown to be more effective than the simple binary representations in the CNN case [15]. Since graphs generated from meshes do not have nodes on the inside of the object, the SDF for GNNs is in fact just the shortest Euclidean distance between $x_i$ and the object, estimated in a discrete case. However, it provides each node with very limited information about the object. The SDF value only indicates the existence of an object at the distance of $SDF(x_i)$. No information about the object's size, shape, or direction from the node is given by the SDF, even though all these factors will affect the flow at the node. The boundary of the circle (320) in FIG. 3(a) indicates the uncertainty due to incomplete information of $SDF(x_i)$. Although some other properties about the nodes and the flow, such as the spatial location of the nodes, inlet, angle of attack, and Mach number, can also be provided as input node features, they cannot substitute the missing geometric information, which remains to be acquired by the nodes through message-passing. Note that this weakness is also true of typical CFD simulators where each mesh cell carries no global geometry information and the object boundary condition is transmitted only locally.

Previous GNN-based CFD methods employ on-shell GNNs and exploit the physical knowledge in different ways. Some of them embed physical constraints and properties into the architectures and objective functions and some others directly use numerical simulators as a part of their methods. Belbute-Peres et al. [CFDGCN] combined a differentiable CFD simulator and graph convolution network (GCN) for fluid flow prediction. More recently, Bonnet et al. [airfRANS] released a large-scale high-resolution two-dimensional (2D) turbulent flow RANS simulation datasets on airfoils and demonstrated good generalisation capabilities of GraphSAGE and Graph U-Net from earlier works to different physical conditions and airfoil geometries. GraphSAGE is a framework for inductive representation learning on large graphs. Graph U-net is an encoder-decoder architecture suitable for graph networks.

Chen et al. [Chen-GCNN] proposed their own permutation-invariant edge-convolution layer and smoothing layer to predict laminar flow on obstacles of different shapes. Their proposed architecture, which is referred to as *Chen-GCNN* in this disclosure, showed better performance than the standard U-net model used previously. All these prior art GNN works neglect the cell characteristics, which, in the finite volume method, are used to discretise the governing equations and model the flow among the cells.

Graph Convoluted Neural Network Features and Training Scheme

To give each node global geometric perspective about the object and its surrounding environment, the present disclosure defines two features: Shortest Vector (SV), and Directional Integrated Distance (DID). SV is the vector formed by an internal cell centroid node $x_i$ and its closest boundary face node $x_b$ (FIG. 3b), and is defined as:

$$\phi(x_i) = x_i - x_b \text{ s.t. } \min_{x_b \in B} \left\| x_i - x_b \right\| \qquad (2).$$

SV is related to SDF in that the length of SV, $\|\phi(x_i)\| = SDF(x_i)$. However, SV has more discriminative power than SDF because two nodes, $x_i$ and $x_j$, can have the same SDF values (i.e., $SDF(x_i) = SDF(x_j)$) despite the vectors $\phi(x_i)$ and $\phi(x_j)$ not being the same.

One limitation of SV is that only the closest node on the object's boundary is represented. Information in other directions is still missing. DID defined on an angular range (FIG. 3c and FIG. 4) is a generalisation of SV. DID has different angular segments to handle different directions.

FIG. 4 shows four overlapping angular segments, each with a range of $2\pi/3$. To clearly present the concept of DID in the following description, we consider a continuous object boundary, using a 2D example for simplicity. For the $j^{th}$ segment of DID, $\theta_j$ and $\theta'_j$ represent the starting and ending angles of the segment, respectively, where $\theta_j \leq \theta'_j$.

The continuous version of DID is defined as:

$$DID(\boldsymbol{x}_i, \theta_j, \theta'_j, B_c) = \int_{\theta_j}^{\theta'_j} w_j(\theta) \, g(x_i, B_c, \theta) d\theta \qquad (3),$$

where $w_j(\theta)$ is a weightage function such as Gaussian function with a center at $(\theta_j + \theta_{j+1})/2$, $B_c$ is the continuous boundary of the object, and $g(x_i, B_c, \theta)$ is the shortest Euclidean distance between the object and the node $x_i$ at the direction $\theta$.

If there is no object boundary at the direction $\theta$, an appropriately large constant, as denoted in FIG. 2c as $\infty$, is

given to $g(x_i, B_c, \theta)$. In this continuous version of DID, $B_c$ is represented by a parametric equation rather than a set of nodes. Each DID value provides a weighted average distance between the object and the node in a particular angle range. While shorter angular segments make a more accurate description of the object, it increases the number of input features to train the network with. In this work, we use SV and DID to provide relative global geometry information of the object and its environment to the input nodes. Hence, this information will not have to be collected during propagation, easing the learning process. The algorithmic details of our discrete, non-parametric DID implementation can be found in the appendix.

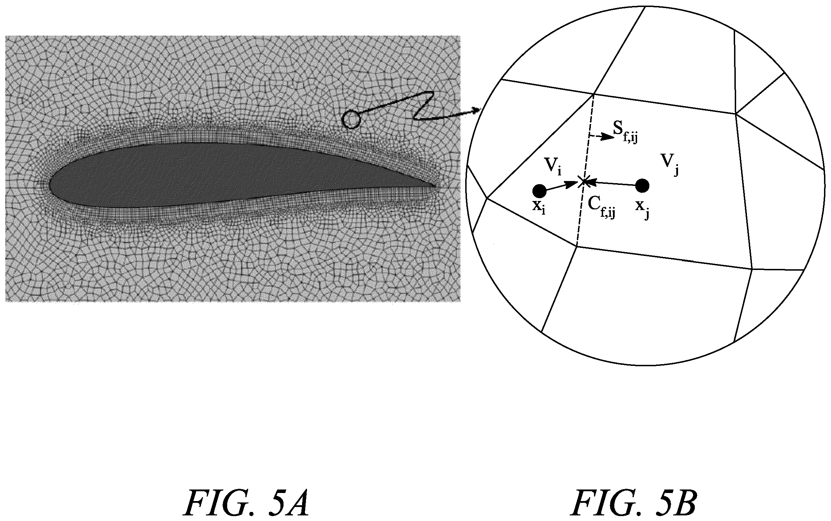

FIG. 5 shows: (a) a typical CFD mesh with an example aerofoil body surrounded by different sizes of cells; (b) Illustration of cell characteristics as used here, namely cell centroids, $x_i$ and $x_j$, face centroid, $c_{f,ij}$, face area normal vector, $S_{f,ij}$, and cell volumes, $V_i$ and $V_j$. The example is a 2D mesh, but may be extrapolated to a 3D mesh.

Consider the integral form of the steady state, incompressible turbulent Navier-Stokes equation for $x$ direction over a control volume, which is given by

$$\int \nabla \cdot \left( \bar{u}_x \overline{U} - (\nu + \nu_t) \nabla \bar{u}_x \right) + \frac{\partial \bar{p}}{\partial x} \mathrm{d}V = \oint \left( \bar{u}_x \overline{U} - (\nu + \nu_t) \nabla \bar{u}_x \right) \cdot \mathrm{d}S + \int \frac{\partial \bar{p}}{\partial x} \mathrm{d}V = 0 \ , \ (4)$$

where $\overline{U} = [\bar{u}_x, \bar{u}_y]^T$ is the velocity vector, $\nu$ and $\nu_t$ are the dynamic and turbulent viscosities respectively, and $\bar{p}$ is the normalised pressure. The second expression of equation 4 is obtained from Gauss's theorem, where S denotes the area normal vector on the surface of the control volume and points outwards by convention. The finite volume method discretises the control volume into cells, as shown in FIG. 5(a). For sufficiently small cell volume V like in FIG. 5(b), all variables within a cell or along each of its faces are approximately constant [11], so equation 4 becomes:

$$\sum_f \left( \bar{u}_x \overline{U} - (\nu + \nu_t) \nabla \bar{u}_x \right)_f \cdot S_f + \left( \frac{\partial \bar{p}}{\partial x} \right) V = \sum_f \Phi_f \cdot S_f + \Omega V = 0 \qquad (5),$$

where f is a counter for the discrete faces of the cell. The first and second terms of the first expression of equation 5 are known as the flux ($\Phi$) and source ($\Omega$) terms, respectively, thus constituting the second expression.

In typical finite volume simulators, variables like $U$ and $\bar{p}$ are solved at the cell centroids, such as $x_i$ and $x_j$ in FIG. 5(b). However, from equation 5, the flux term needs face centroid values, which can be approximately interpolated from the cell centroids by:

$$\Phi_f \approx \left( \Phi_i \frac{\|c_{f,ij} - x_i\|}{\|x_j - x_i\|} + \Phi_j \frac{\|c_{f,ij} - x_j\|}{\|x_j - x_i\|} \right)_{(6)}.$$

The interpolated flux term will then be projected to its respective face area normal vector, $S_{f,ij}$. Note that equation 6 implies that the face centroid at $c_{f,ij}$ lies along the line connecting $x_i$ and $x_j$, which is not necessarily true because cells in a CFD simulation need not be regular and can have different sizes and shapes, as shown in FIG. 5(b). In general, cells with small volumes are used in sensitive regions, for instance the close vicinity of an object or wake region where flow variables may change drastically due to boundary conditions. Therefore, equation 6 will incur an error that corresponds to the deviation from the face centroid, though a spatial correction scheme can be implemented as mitigation. Also, the error will reduce with smaller cell volume, which is the main reason for the high computational cost of CFD. On the other hand, the source term weighted by the cell volume will be represented exactly by $\Omega_j V_j$.

As shown in equations 5-6, the finite volume method uses cell characteristics, such as the cell and face centroids, face area normal vector, and cell volume, extensively. Motivated by the finite volume method, these characteristics are embedded in GNN. To ease the following discussion, we will take the spatial graph convolution network (SGCN) as an example. First introduced and evaluated on graphs from chemical compounds, the SGCN has two key features: (i) use of the spatial location of graph nodes as node attributes and (ii) use of multiple filters. One limitation is that the node attributes only consider node positions and ignore other useful information. Hence, we generalise the convolution to be able to take in node attributes, $p_j$, and edge attributes, $q_{ij}$. Given node feature $h_i \in R^{din}$ at the $i^{th}$ node and its spatial location $x_i \in R^t$, a convolution using FVF is defined as

$$\bar{h}_i(U, b, N_i) = \sum_{j \in N_i} R\,e\mathrm{LU}\left( U^T\left(q_{ij}\right) + b \right) \odot \left( h_j \oplus p_j \right) \qquad (7),$$

where $U \in R^{3t \times d_{in}}$ and $b \in R^{d_{in}}$ are trainable parameters, $N_i$ is an index set indicating the neighbourhood of the node i and $\odot$ is the element-wise multiplication. In our model, the node attributes are its associated cell volume, denoted as $p_j = V_j \in R^1$, and the edge attributes are its associated face area normal vector and the relative spatial location of its face centroid to the nodes, denoted as $q_{ij} = S_{f,ij} \oplus \left( c_{f,ij} - x_i \right) \oplus \left( c_{f,ij} - x_j \right) \in R^{3t}$. The complete equation is hence

$$\overline{h}_i(U, b, N_i) = \sum_{j \in N_i} R\,eLU\left( U^T \left( \boldsymbol{S_{f,ij}} \oplus \left( \boldsymbol{c_{f,ij}} - \boldsymbol{x_j} \right) \right) + b \right) \odot \left( h_j \oplus \mathbf{V}_j \right). \quad (8).$$

Note that cell centroids $x_i$ and $x_j$ are used as reference points when we use face centroid, $c_{f,ij}$, as with the finite volume method. Finally, as with CNN operations, multiple filters are used and their outputs are concatenated such as

$$\widehat{h}_i(\theta, N_i, k) = h_i(U_1, b_1, N_i) \oplus \cdots \oplus h_i(U_k, b_k, N_i) \quad (9),$$

where $\theta = \{U_1, \cdots, U_k, b_1, \cdots, b_k\}$ are trainable parameters and $\oplus$ represents an operator of concatenation. Finally, an MLP is applied on $\widehat{h}_i$ and the final output of node i is obtained, whose dimension is the same as the output dimension of the MLP.

When used directly, we refer to this method as *Finite Volume Graph Convolution (FVGC)* and $V_i$, $S_{f,ij}$, $(c_{f,ij} - x_i)$, $(c_{f,ij} - x_j)$ as *Finite Volume Features* (FVF). Alternatively, the same principles can be incorporated into other graph convolution types indirectly, for instance by using the FVGC as the aggregation function of the SAGE convolution. In convolutions like the invariant edge convolution, which already employ multiple filters, just the use of node and edge attributes as in equation 7 has to be implemented.

Any common 2D mesh typically used for CFD simulations, such as those with triangular or quadrilateral cells, can be reconstructed from its prescribed FVF.

Residual training is a known approach in image super-resolution. The general idea is to train the network to predict the residual field $F - Upsample(F_{LR})$, where $F_{LR}$ is the low-resolution field, instead of the original field $F$ itself. $F_{LR}$ may be derived from a lower resolution CFD run, which saves some computing cost. However, the most common way of utilizing low-resolution data as reference in CFD-AI literature is to concatenate $Upsample(F_{LR})$ to one of the intermediate convolution layers. The prior knowledge from the low-resolution flow field may be further utilised through the residual training scheme. Instead of minimising the loss $\mathcal{L}(F_{GT}, \hat{F})$, where $\hat{F}$ is the predicted flow variable, $F_{GT}$ is the corresponding ground truth, and $\mathcal{L}$ is an arbitrary loss criterion, the network minimises the residual loss $L_r = \mathcal{L}(F_{GT}, \hat{F}_r + Upsample(F_{LR}))$. Here, $\hat{F}_r$ is the predicted residual and the prediction is $\hat{F} = \hat{F}_r + Upsample(f_{LR})$. Since the low-resolution field is an approximation of the ground truth, much of the residual field will be close to zero. Thus, training the model to predict the residual field eases the learning, and helps the model to focus on the more nuanced areas where the low-resolution fields tend to be inaccurate. The loss may be L2 norm of GT pressure and the predicted pressure, L1 norm of normalized u, v, p from GT and predicted results or can even be the difference between two drag coefficients that are used to train the network. In any case, this loss is minimized with respect to the predicted flow variable during training of the neural network.

After training, a new geometry may be used for prediction, as well as or instead of varying other input conditions such as boundary conditions, operating conditions. When new geometry is to be used, the finite volume features need to be generated to match the new mesh and its relationship with the geometry of the technical object being tested. These are used to update the node and edge parameters of the neural network.

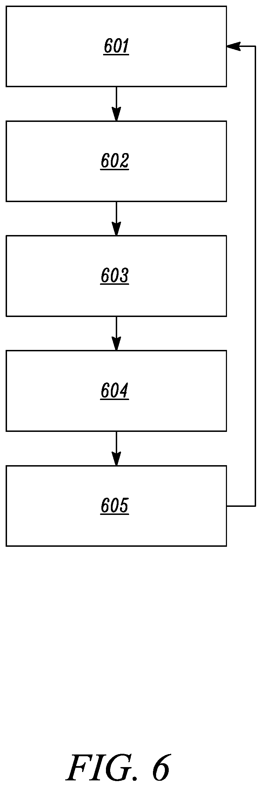

FIG. 6 shows a flowchart to illustrate the method steps taken when using the trained network for prediction. These steps are similar to those used during the training phase, except that during training the mesh will have been generated prior to producing CFD output to be used for training, and the error between the network output and the original CFD data will be used to propagate training values to the neural network.

601. Generate a new mesh for the new geometry with an external meshing tool. This is preferably the same or similar meshing tool as used to generate a mesh for the training data. The mesh is generated using a meshing tool to divide the space around the object into finite volumes.

602. Build a graph for the new mesh as follows:

Create a node for each mesh cell;
For each pair of adjacent cells that share a face in the mesh, create an edge between the corresponding graph nodes;

603. For each cell in the mesh:

Extract the coordinates $x_j$ of its center and cell volume $v_j$;
Calculate the geometric features (Shortest Vector, DID) at the center;
Concatenate the coordinates and all geometric features into a long feature vector and attach it to the corresponding graph node as the node feature $h_j$.

604. For each (ordered) pair of adjacent cells that share a face in the mesh, calculate the face surface area vector $S_{ij}$ and face centroid $c_{ij}$.

605. All the components of the graph convolution (Eq 6) are now available, including the matrix U and vector b which have been obtained from the training\. Apply the graph convolution to every node obtained in Step 2, which maybe carried out in parallel e.g. on a multicore processor such as a GPU. This can be multiplexed based on Eq 7. All node features will be updated through the process.

606. Repeat Step 5 a number of times as defined by the depth of the GNN.

The last iteration of Step 605 would make the dimension of the output node features 3, corresponding to the x-velocity, v-velocity, pressure. Thus, the trained graph neural network will produce output data that predicts the CFD output that would have been obtained with days or weeks of simulation. This output data can be further processed as necessary to provide aerodynamic performance indicators, such as drag, lift, stall range and pressure loss etc. The process described in steps 601-606 can then be repeated with new geometries. Typically, a set of geometries are generated with an optimisation in mind. Different geometric parameters are varied across the set, tested using the GNN to predict the aerodynamic performance parameters, and the geometry that optimises the performance parameter under test can be selected for further processing. The further processing may involve full CFD modelling to be run for a subset of the geometries.
An extra degree of optimisation is possible, using the trained neural network to identify where there are pinch points, inflections, instabilities etc. in the flow around the object. These results may be used to precondition a full CFD model of the same geometry over a narrower set of input conditions. This leads to a faster, more accurate result from the CFD model. The neural network can be retrained using these new CFD results and the retrained AI can be used to quickly optimise designs, for example, to avoid problems around the identified pinch point.

Results of Comparisons

The method disclosed using geometric and finite volume features has been compared using two geometry databases, 2DSHAPES [Jonathan Viquerat and Elie Hachem. A supervised neural network for drag prediction of arbitrary 2D shapes in laminar flows at low Reynolds number, Computers & Fluids, 210: 104645, 2020] and the AirfRANS data referred to above, and three state-of-the-art GNN methods and their respective training schemes in the CFD-AI literature, Chen-GCNN, Graph U-Net [AirfRANS], and CFDGCN [Filipe De Avila Belbute-Peres, Thomas Economon, and Zico Kolter. Combining differentiable 369 PDE solvers and graph neural networks for fluid flow prediction. In International Conference 370 on Machine Learning, pages 2402-2411. PMLR, 2020].
While all three state-of-the-art methods utilise mesh node-based graphs as shown in FIG. 2a, we adapted both datasets to cell centroid-based graphs as shown in FIG. 2b to train the models with the FVF as disclosed herein. Models that do not originally use FVF are trained on mesh node-based graphs to maintain consistency with the baselines. The effectiveness of residual training is demonstrated only on CFDGCN with the AirfRANS dataset because CFDGCN is the only method that takes in low-resolution data. 2DSHAPES is a collection of 2000 random shapes where each shape is generated by connected Bézier curves along with their steady-state velocity vector $[^-u_x, u^-_y]^T$ and pressure $p^-$, at Reynolds number = 10. The training set, validation set, and test set consist of 1600, 120, and 200 shapes, respectively. We use this dataset to demonstrate the effectiveness of our features applied to the Chen-GCNN model.
AirfRANS is a high fidelity aerodynamics dataset of airfoil shapes. Their Reynolds Averaged Navier-Stokes (RANS) solutions range from Reynolds numbers 2 to 6 million and angle-of-attacks -5 ∘ to +15 ∘ degrees. In their scarce data regime, the training set, validation set, and test set consist of respectively 180, 20, and 200 airfoils along with their steady-state velocity vector $[^-u_x, u^-_y]^T$, pressure $p^-$, and turbulent viscosity $v_t$. This dataset was used as-is to demonstrate the effectiveness of the new features disclosed here when applied to the Graph U-Net. An amended dataset, which excludes the turbulent viscosity field, is likewise used for comparing CFDGCN with and without the proposed features. The turbulent viscosity field is excluded to more closely match the original CFDGCN method, which only predicts velocity and pressure fields. Additionally, we use the authors' codebase from AirFRANS to generate RANS solutions of the same set of airfoils on coarser meshes (~ 20 times fewer nodes than the original), which we refer to as *coarse-AirfRANS* and utilise as a database of low-resolution reference flow fields to evaluate the effectiveness of residual training on CFDGCN.

Performance Metrics

To show that incorporating the proposed features and residual training into the state-of-the-art methods significantly improves performance, different methods have been evaluated with different measures to match the metrics in their respective studies. To compare Chen-GCNN with our models derived from it, the MAE loss function is used, which is the summation of mean-absolute error of flow variables averaged over the test set. For Graph U-Net from Bonnet et al. [airfRANS], the following five types of metrics are employed:

1. *Test loss:* Loss function by equation 3 in [airfRANS] evaluated on and averaged over the test set.
2. *Volume MSE:* Mean-squared errors of normalised flow field ($[\bar{u}_x, \bar{u}_y]^T$, $\bar{p}$, $v_t$) predictions at internal nodes.
3. *Surface MSE:* Mean-squared error of normalised flow field predictions at boundary nodes. Due to boundary constraints, only pressure ($\bar{p}$) is non-zero at airfoil surfaces.
4. *Relative error:* Relative error in the predicted lift and drag coefficients ($C_L$, $C_D$).
5. *Spearman's correlation:* Spearman's rank correlation coefficient ($\rho_L$, $\rho_D$) between the ground truth and predicted force coefficients, where 1 represents the most ideal performance.

To evaluate CFDGCN and the models derived from it, the MSE loss function is used, which is the mean-squared error of flow field prediction averaged over the test set.

On the Chen-GCNN model using invariant edge convolutions, Table 1 shows that the adoption of the geometric features (Geo) and finite volume features (FVF) reduces MAE by ~24% from the baseline. Experimental results demonstrate that both the geometric and finite volume features contribute to improving the prediction performance. GCNN was also tested with SAGE convolution and obtained ~82% reduction in MAE with respect to the baseline.

Table 1: Performance evaluation using Chen-GCNN.

| Models | Conv type | MAE*10 |
|---|---|---|
| Chen-GCNN (Baseline)<br>Chen-GCNN w/ Geo<br>Chen-GCNN w/ FVF w/ Geo | Invariant Edge Convolution | 1.1590<br>0.9727<br>**0.8857** |
| Chen-GCNN (Baseline)<br>Chen-GCNN w/ Geo<br>Chen-GCNN w/ FVF w/ Geo | SAGE Convolution | 6.7103<br>3.8041<br>**1.1982** |

We trained Graph U-Net architecture (baseline) with the same experimental set-up described in Appendix L of Bonnet et al. [airfRANS]. The reason for choosing Graph U-Net is that it is the best-performing model reported. We evaluated this baseline with two convolution types: SAGE convolution and vanilla graph convolution. In Table 2a, we observe that, on SAGE convolution, the adoption of the geometric and finite volume features reduces the loss on the test set by at least 20% as indicated by the baseline method's loss on the test set ($1.8158 \times 10^{-2}$) and that of Graph U-Net w/FVF w/Geo ($1.4411 \times 10^{-2}$). From Tables 2a and 2b, we also observe that our features improve the volume MSE of three out of four flow variables, the surface MSE of pressure, drag coefficient relative error, and drag coefficient Spearman's correlation. The inferior performance on some metrics such as the volume MSE of vt and relative error of CL and ρL is attributed to the loss function introduced in Bonnet et al.'s work [airfRANS], which is not designed to explicitly minimise these metrics. We also tested Graph U-Net with vanilla graph convolution and obtained 70% reduction in the loss on the test set with respect to the baseline.

CFDGCN uses a CFD simulator in the training and testing scheme to generate low-resolution data and vanilla graph convolution to enhance learning on a high-resolution mesh with varying initial physical conditions, e.g., angle of attack and Mach number. Although CFDGCN generalises well to unknown physical conditions, it requires the geometry to remain fixed for the purpose of optimising the coarse mesh. This makes the model unable to generalise to different geometries and limits the method's practical functionality. Hence, in our adaption, we removed their differentiable CFD simulator component from the training and testing loop and directly passed the coarse-AirfRANS solutions for upsampling. As the experimental set-up assumed that a low-resolution flow field is available, we adopted and evaluated the proposed residual training scheme in addition to Geo and FVF. In Table 3, we observe that the predictive error reduces by at least 40%, as indicated by the baseline method's MSE ($0.1212 \times 10^{-2}$) compared to that of CFDGCN w/ residual training w/ FVF w/ Geo ($0.0719 \times 10^{-2}$). Incorporating the proposed features one by one consistently reduces the error, suggesting that the proposed features and residual training scheme are generally effective. We also tested CFDGCN with SAGE convolution and obtained a 53% reduction in MSE with respect to the baseline.

### Table 2: Performance evaluation using Graph U-Net.
(a) Test loss, Volume MSE and Surface MSE metrics.

| Models | Conv type | Test loss $\times 10^{-2}$ | Volume MSE $\times 10^{-2}$ | | | | Surface MSE $\times 10^{-2}$ |
|---|---|---|---|---|---|---|---|
| | | | $\bar{u}_x$ | $\bar{u}_y$ | $\bar{p}$ | $\nu_t$ | $\bar{p}$ |
| Graph U-Net (Baseline) | SAGE Convolution | 1.816 | 1.140 | 1.429 | 2.190 | **2.492** | 0.932 |
| Graph U-Net w/ Geo | | 1.786 | 1.224 | 0.599 | 2.028 | 3.286 | 0.828 |
| Graph U-Net w/ FVF w/ Geo | | **1.441** | **1.061** | **0.515** | **1.368** | 2.724 | **0.549** |
| Graph U-Net (Baseline) | Vanilla Graph Convolution | 0.153 | 0.192 | 0.128 | 0.140 | 1.518 | 0.463 |
| Graph U-Net w/ Geo | | 0.127 | 0.174 | 0.113 | 0.101 | 1.214 | 0.363 |
| Graph U-Net w/ FVF w/ Geo | | **0.045** | **0.030** | **0.023** | **0.045** | 0.828 | **0.150** |

(b) Relative error and Spearman's correlation metrics.

| Models | Conv type | Relative error | | Spearman's correlation | |
|---|---|---|---|---|---|
| | | $C_D$ | $C_L$ | $\rho_D$ | $\rho_L$ |
| Graph U-Net (Baseline) | SAGE Convolution | 5.315 | **0.211** | 0.1151 | 0.992 |
| Graph U-Net w/ Geo | | 3.794 | 0.279 | -0.0667 | **0.995** |
| Graph U-Net w/ FVF w/ Geo | | **0.949** | 0.855 | **0.495** | 0.992 |
| Graph U-Net (Baseline) | Vanilla Graph Convolution | 28.270 | **0.192** | **0.109** | 0.969 |
| Graph U-Net w/ Geo | | 27.671 | 0.208 | 0.084 | **0.985** |
| Graph U-Net w/ FVF w/ Geo | | **2.474** | 0.519 | -0.191 | 0.962 |

### Table 3: Performance evaluation using CFDGCN.

| Models | Conv type | MSE $\times 10^{-2}$ |
|---|---|---|
| CFDGCNN (Baseline) | Vanilla Graph Convolution | 0.1211 |
| CFDGCN w/ Geo | | 0.1093 |
| CFDGCN w/ FVF w/ Geo | | 0.0918, |
| CFDGCN w/ residual training w/ FVF w/ Geo | | **0.0719** |
| CFDGCN (Baseline) | SAGE Convolution | 0.1342 |
| CFDGCNN w/ Geo | | 0.1092 |
| CFDGCNN w/ FVF w/ Geo | | 0.0631 |
| CFDGCNN w/ residual training w/ FVF w/ Geo | | **0.0628** |

Disclosed herein are two novel geometric representations, Shortest Vector (SV) and Direction Integrated Distance (DID), and the use of Finite Volume features (FVF) in graph convolutions in a convoluted neural network. The SV and DID provide a more complete representation of the geometry to each node. Moreover, the FVF enable the graph convolutions to more closely model the finite volume simulation method. Their effectiveness at reducing prediction error has been shown across two datasets, as well as three different state-of-the-art methods and training scenarios using various types of graph convolution. Additionally, the results demonstrate the ability of residual training to further improve accuracy in scenarios where low-resolution data are available.

Each of these features contributes to providing predicted CFD results that enable the rapid optimisation of the design of a technical component, particularly for airfoils, such as those used in turbomachinery.

FIG. 7

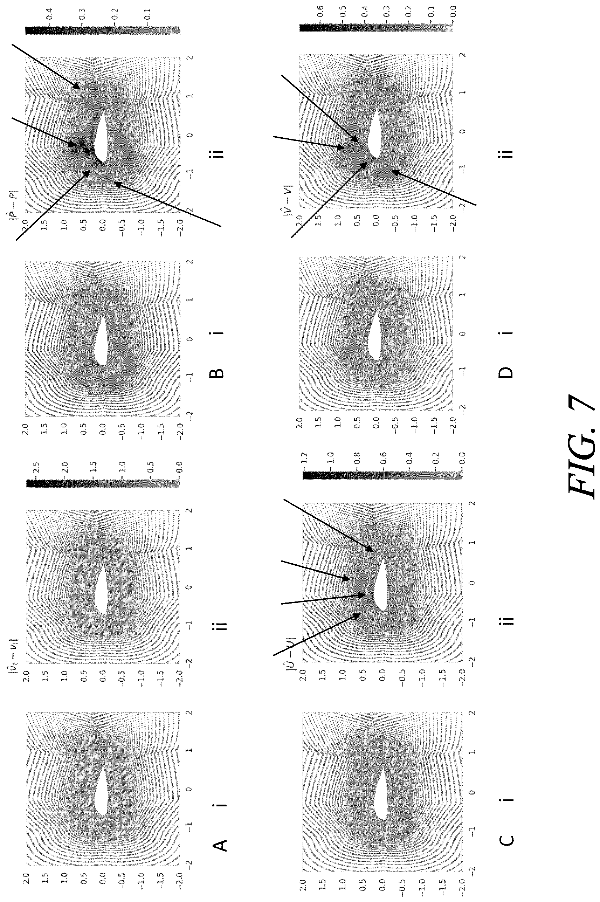

A graphical comparison of various results obtained using a GCN trained using the method described herein is shown in FIG. 7. In each case, the plots show the error between the trained GCN output and the full CFD output expected. The lefthand plot in each chart shows the error from the current method, and the right hand plot shows the error using an earlier method disclosed in Florent Bonnet, Jocelyn Ahmed Mazari, Paola Cinnella and Patrick Gallinari "AirfRANS: High Fidelity Computational Fluid Dynamics Dataset for Approximating Reynolds-Averaged Navier-Stokes Solutions", NeurIPS 2022. The airfRANS paper used a GCN with only distance fields linking the input nodes to the simulated geometry.

Chart A compares CFD generated viscosity output from a numerical simulator (Openfoam) with the prediction results from this method (left, i) and the AirfRans paper (right, ii). Darker shading means higher error. The results are visually similar. The coefficient of drag calculated from these results may therefore be of similar accuracy to the earlier method.

Chart B compares pressure from a numerical simulator (Openfoam) with the prediction results from this method (left, i) and the AirfRans paper (right, ii). Darker region means higher error. Some differences are highlighted by arrows, showing where the pressure output varies compared to the CFD model.

Chart C compares velocity in x-direction from a numerical simulator (Openfoam) with the prediction results from this method (left, i) and the AirfRans paper (right, ii). Darker region means higher error. Main differences indicated by arrows.

Chart D compares velocity at y-direction from a numerical simulator (Openfoam) with the prediction results from this method (left, i) and the AirfRans paper (right, ii). Darker region means higher error. Main differences indicated again using arrows.

The charts show that the methods disclosed herein have improved the accuracy in the use of graph neural networks to predict fluid dynamic flows, therefore increasing the utility of this method as a design tool for aerodynamicists.

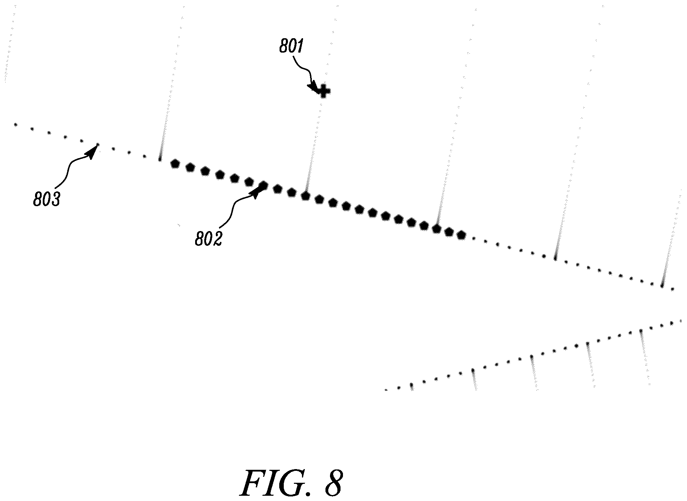

FIG. 8 illustrates an alternative way of representing the relationship between the geometry of the training (and prediction) technical objects and the neural network node locations. The '+' symbol 801 represents a flow point of interest, which may be located at the centroid of a mesh cell as described in the methods above, in the same way as the graph nodes 210 of FIG. 2 and FIG. 3. The circles 802 represent geometry points of interest on the surface of the object being simulated. The set of points representing the geometry are a selection of points from the flow point of interest, for example a fixed angle either side of the shortest vector, or points on the geometry within a certain distance either side of the closest point. $\Delta x_n$, $\Delta y_n$ represents an array of displacement vectors to fit Bezier or other curves, such as a parametric equation. The smaller dots 803 represent other points on the geometry surface not included in the analysis.

By deriving parameters for an equation from the geometric relationship between a node point and the object geometry, a multiparameter vector passed to the input nodes of the neural network can represent the distance and curvature of the geometry in the vicinity of each node, so that during training and prediction, the neural network is using more information about the object geometry than a single value would represent. For example, the parameters of the equation would pass information as to whether the closest surface to the flow point is convex or concave.

Instead of $\Delta x_n$, $\Delta y_n$, which suggest orthogonal coordinates, the method can use cylindrical coordinates x, r, $\Theta$, which are particularly useful for turbomachinery. In an embodiment, a successful method trialled for CFD geometry is fitting Bezier curves to $\Delta x$, $\Delta r$, $r\Delta theta$ in parallel, where $\Delta x$, etc. represent the distances between a chosen flow point of interest in the flow field $x_f$ (801) and nearest geometry surfaces $x_g$. to the

$$\Delta x = x_{f,x} - x_{g,x}$$

$$\Delta r = x_{f,r} - x_{g,r}$$

$$r\Delta theta = r*(x_{f,\Theta} - x_{g,\Theta})$$

where $x_{f,x}$ $x_{f,r}$ $x_{f,\Theta}$ and $x_{g,x}$ $x_{g,r}$ $x_{g,\Theta}$ represent x, r, $\Theta$ coordinates of $x_f$ and $x_g$ respectively.

It is beneficial for cases with faster flows, e.g. mach 1, converting these distances into times by dividing by an averaged velocity magnitude, v, and filtering by time. This helps ensure the most relevant points are selected.

$$\Delta tx, \Delta tr, r\Delta theta = \Delta x/v, \Delta r/v, r\Delta theta/v,$$

$\Delta x$, $\Delta r$, $r\Delta theta$ may be found using a k-d tree. For example, the closest 100-400 points by distance or time are taken. Here, there is a trade-off between memory usage, sampling time, geometry description and fitting time to get the best representation of the surface on average. Too few points and no curvature of the geometry will be included, too many points and the sampling will be very slow for little gain.

$\Delta x$, $\Delta r$, $r\Delta theta$ or $\Delta tx$, $\Delta tr$, $r\Delta theta$ may be fitted using 3 separate Bezier curves, or parametric equations. This has been found to work better than any other approach trialled including Nurbs (Non-uniform rational B-spline).

Additional variables may be specified as below as additional inputs to the neural network, during training and prediction.

Minimum wall distance - this is the minimum distance between the flow field and blade. For points which are close to the blade, care has to be taken not to introduce noise from the relative positioning of points along the radius/span. In some embodiments, distances are calculated using $\Delta x$, $r\Delta theta$ only.

Hub/annulus distance - this is the distance between the point in the flow field and the inner/outer casing.

As an option, if the aerofoil, for example a turbine blade, is remeshed to give a square grid whereby the indexes are logically laid out, grid sampling can be used instead of k-d tree. This is done by finding the nearest point and then using the indexing patterns to find the other points.

Multiple Objects

There are many situations in which multiple technical objects, such as aerofoils interact, and therefore the method described above can be extended to provide simulation data for the interaction. For example, a nozzle blade may interact aerodynamically with a turbine blade. Or a leading wing may interact with a trailing wing. The method could be used for non-aero related problems, such as the interaction between a car body and a spoiler.

For predicting a flow field where there are multiple objects, the following approaches may be used. This provides an estimate of a multiple body CFD field to avoid having to run the more complex CFD from scratch.

For the methods below, the starting point for training is a statistically appropriate sample of different geometries, relative positions and boundary fields solved directly using CFD. This is called the 'ground truth'. The 'ground truth' can be divided into a training, validation (to check generalisability) and test set (an independent check of generalisability).

For both methods, existing flow field data for single objects is obtained first from a different source to the ground truth CFD dataset. This data represents the flow field of each object independently, for example in a free stream with no other objects. This data may be CFD generated, measured e.g. using wind tunnels or other fluid techniques, or generated using a trained neural network for a single object such as the neural network described above trained to generate aerodynamic performance values for a single object. For example, a wide selection of previously generated aerofoil flow data may exist from previous CFD runs that has been validated in many ways, and this is used to form an initial estimate of combined flow fields so that the multiple object neural network only requires training on the differences due to the combination of flow fields, not generating the flow fields from scratch. This greatly speeds up the training process compared to training a neural network on multiple object geometries in multiple geometric relations to each other.

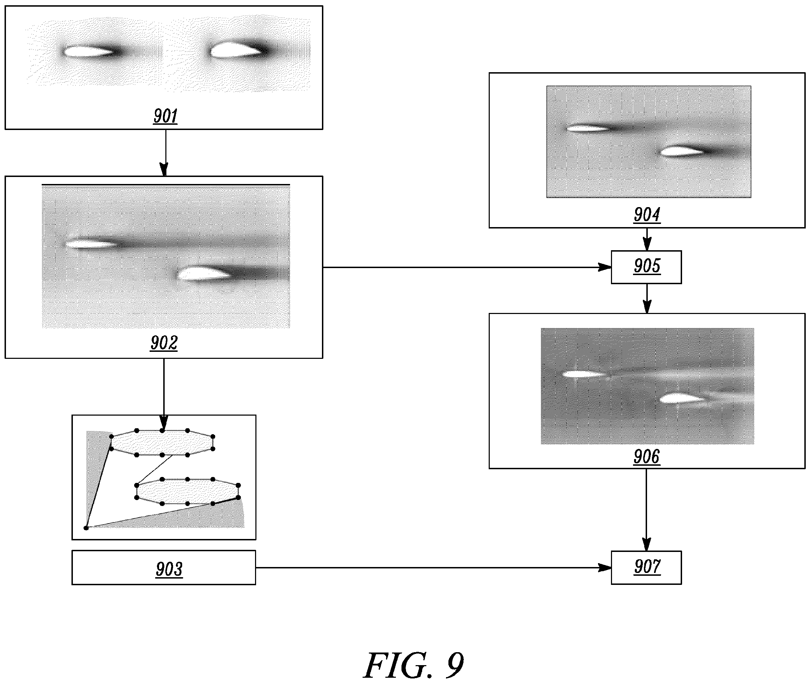

Referring to FIG. 9, which is a simplified flow diagram illustrating the training process to train a neural network to predict the flow field of multiple objects. This is achieved by:

901. Obtain data representing the flow field of isolated objects, in the way described above.

902. combining the flow fields of the isolated objects using a deterministic numerical technique such as superimposition, placing fields adjacent to each other or any other repeatable numeric process based on a set of different geometric separations between the bodies. For example, the objects or bodies may be separated horizontally and / or vertically, have different rotations relative to each other such as angle of attack. This combined flow field is used as the 'initial estimate' for the flow field of the multiple objects.

903. Calculate the input features from the input geometry such as directional integrated distance (DID) and/or shortest vector as described above for a single object training, modified to take account of multiple objects. While extending the theoretical DID definition to accommodate multiple geometries is conceptually straightforward, the numerical calculations become progressively complex with each additional object. For instance, in the process of determining whether point i is "unobstructed" from a point on an object boundary j, the calculation for DID in a singular-object scenario can rely on the assumption that i only needs to be on the same side of the object as j, without considering obstruction from a different object. Similarly, a multi-object DID calculation cannot assume that the proportion of the angle segment from i facing an object boundary can be represented as a single continuous angle range. A suitable DID can be calculated by computing distance from each relevant point i to every boundary point within its segment range, applied to each object boundary for an angle range that is not obstructed by another object. This is illustrated in the image above step 903, which may be compared with the single object example in FIG. 4 As described above, the use of the DID to represent the geometry relationship to each input node significantly improves the physical accuracy of the trained neural network. In a special case, one of the objects is a fixed boundary such as a flat surface, for example the ground below two wings, or the annulus boundary surrounding the rotors and stators of a gas turbine engine.

904. Solving the flow fields of the multiple objects using a CFD or other flow field solution approach. This is treated as the 'ground truth'.

905. Creating a 'residual field' 906 between the 'ground truth' and the 'initial estimate'. This is commonly achieved by subtracting the 'ground truth' from the 'initial estimate' on part of or the whole flow field domain.

907. Train the neural network on a set of 'residual fields' on a statistically appropriate sample of different geometries, relative positions and boundary fields.

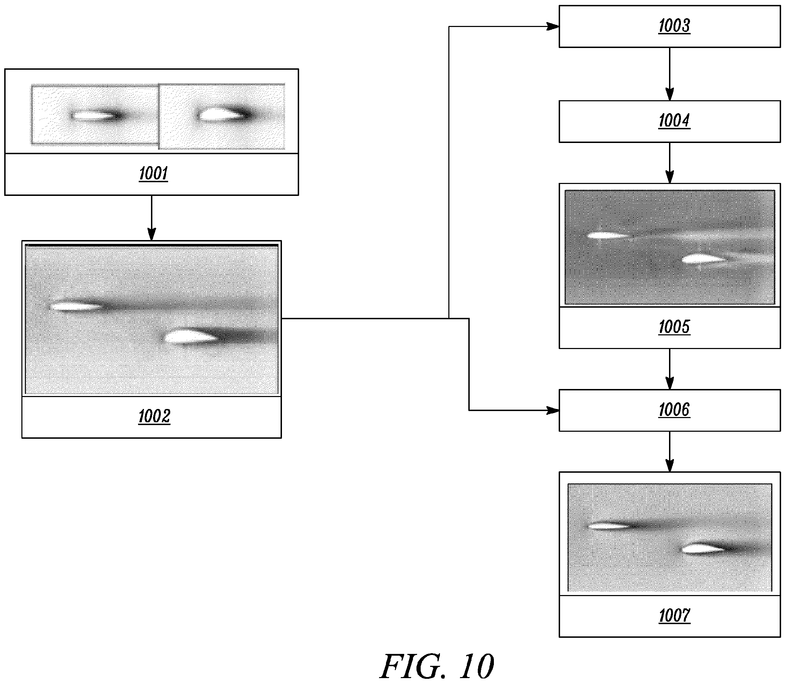

Referring to FIG. 10 which relates to inference using the trained neural network, when given a set of new or unseen geometries with multiple objects:

1001. Obtain data representing the flow field of isolated objects, in the way described above for a single object.

1002. Combine the flow fields of the individual bodies to give a 'combined field' using a deterministic numerical approach identical to the training approach. This generates the initial estimate for the multiple object geometry, combining the existing flow data for each object based on the proposed geometrical relationship between the objects.

1003. Calculate the input features for the new geometry of the multiple objects using the same methodology as used in step 903

1004. The trained neural network from step 907 is used to predict the 'residual field' (1005) of part/whole flow field domain.

1006. The predicted residual field 1005 is added to the 'combined field' from step 1002 to obtain the final 'predicted field' 1007.

The process can then easily be repeated using multiple geometric relationships between the objects. For example, if the objects were turbine blades and rotor blades in a turbine, using the same.

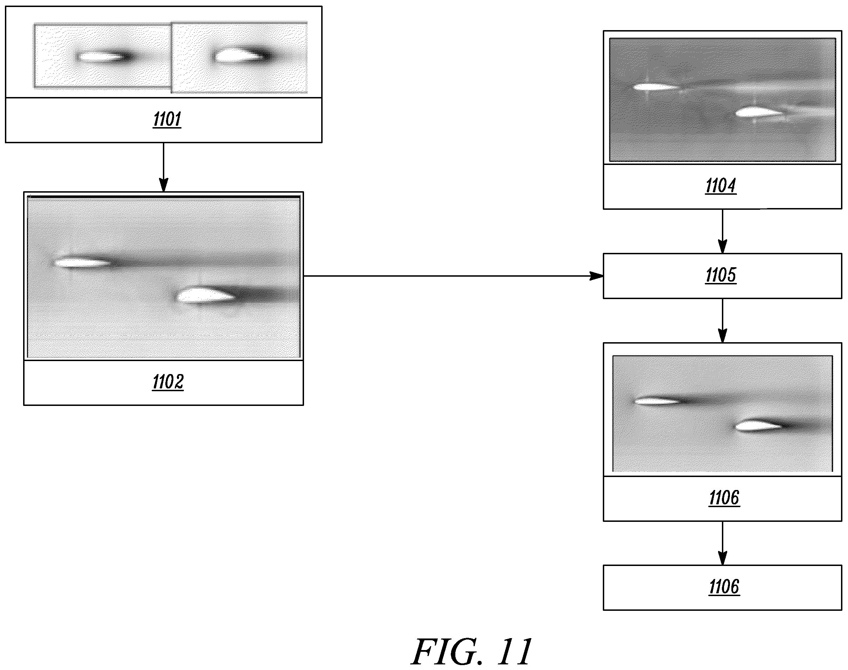

A variation of the multiple objects approach is illustrated in FIG. 11 to FIG. 13. Training:

Steps 1101 to 1104 follow the same process as steps 901 to 904 in FIG. 9. They are briefly repeated here for clarity.

1101. Obtain data representing the flow field of isolated objects, in the way described above.

1102. combining the flow fields of the isolated objects using a deterministic numerical technique such as superimposition, placing fields adjacent to each other or any other repeatable numeric process based on a set of different geometric separations between the bodies. This combined flow field is used as the 'initial estimate' for the flow field of the multiple objects.

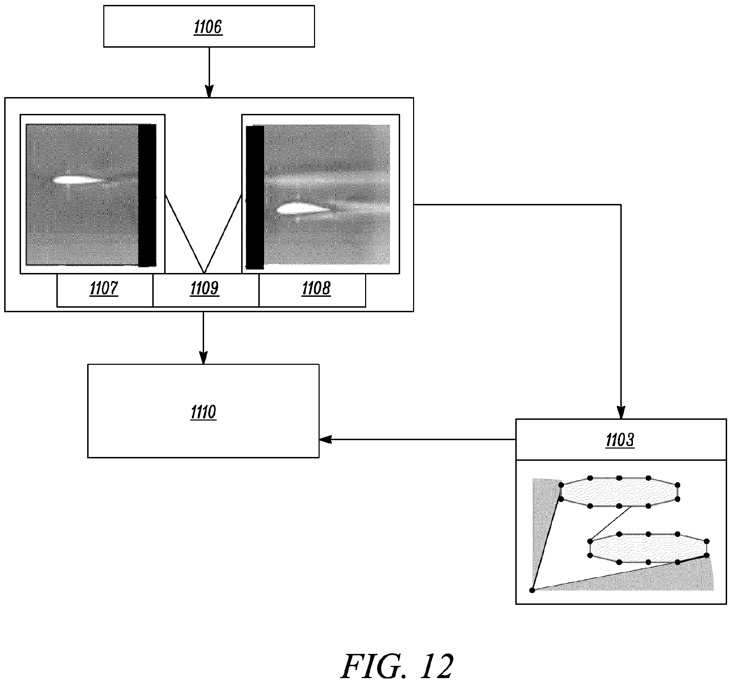

1103 (see FIG. 12). Calculate the input features from the input geometry such as directional integrated distance (DID) and/or shortest vector as described above for a single object training, modified to take account of multiple objects.

1104. Solving the flow fields of the multiple objects using a CFD or other flow field solution approach. This is treated as the 'ground truth'.

1105. Creating a 'residual field' between the 'ground truth ' and the 'initial estimate'. This is commonly achieved by subtracting the 'ground truth' from the 'initial estimate' on part of or the whole flow field domain.

1106 (see both FIG. 11 and FIG. 12). Split the 'residual field' into separate domains. This could be for example into 'front' (1107), 'back' (1108) or 'inner' and 'outer' fields (not shown). The fields need to have overlap regions (1109).

1110 (see FIG. 12). Train a separate neural network for each domain on the set of 'residual fields' for each domain, for a statistically appropriate sample of different geometries, relative positions and boundary fields. Where there is an overlap region - this can be used optionally as input features to the second or subsequent neural network.

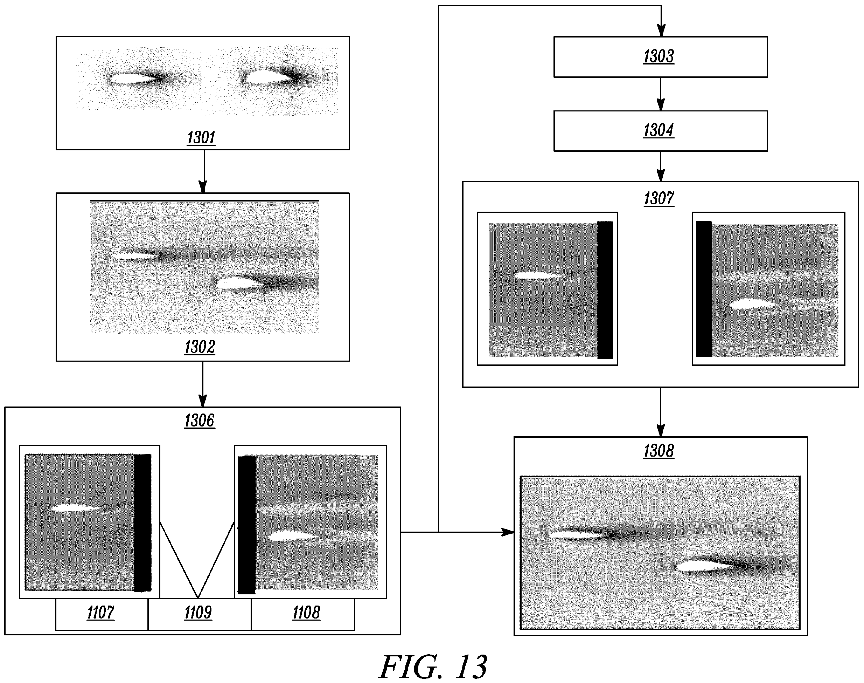

Inference method for the neural network variation described in FIG. 11 and FIG. 12. With reference to FIG. 13, when given a set of new or unseen geometries:

Follow step 1001 to 1003 as for the first method, that is:

1301. Obtain data representing the flow field of isolated objects, in the way described above for a single object.

1302. Combine the flow fields of the individual bodies to give a 'combined field' using a deterministic numerical approach identical to the training approach.

This generates the initial estimate for the multiple object geometry, combining the existing flow data for each object based on the proposed geometrical relationship between the objects.

1303. Calculate the input features for the new geometry of the multiple objects using the same methodology as used in step 1103.

1306. Split the initial estimate into multiple domains using the same methodology as step 1106.

1304. Using the respective separate neural networks obtained in step 1110 on a first domain e.g. front 'residual field' is predicted.

1307. Predict the 'residual field' of each domain e.g. back/front optionally using the overlap region from overlapping domain as an input.

1308. The complete 'residual field' is created by adding the various domains together. The flow field in an overlap region is set to the last prediction of it. The whole 'residual field' is added to the 'combined field' generated in step 1302.

## Claims

1. A method of using a computer implemented neural network for a simulation of aerodynamic performance of a technical object having a geometry, the method comprising:

training the neural network using a plurality of sets of encodings of pre-computed computational fluid dynamics, CFD, outputs, wherein the training is generated using inputs comprising:

a geometry of at least one training technical object;
spatial locations of input nodes of the neural network as node attributes;
a relationship between the geometry of the at least one training technical object and the neural network input node locations;
associated boundary conditions;
operating conditions; and
pre-computed CFD outputs comprising flow fields and aerodynamic performance parameters;

the training using a loss function that evaluates an error between a neural network output and the pre-computed CFD outputs to produce a trained neural network;
using the trained neural network with new simulation inputs to generate as output a predicted aerodynamic performance of the technical object, wherein the relationship between the geometry of the at least one training technical object and the neural network input node locations comprises a vector with at least two parameters.

2. The method of claim 1, wherein using the trained neural network with new simulation inputs to output the predicted aerodynamic performance of the technical object comprises:
providing a plurality of sets of new simulation inputs to the neural network and outputting from the neural network the predicted aerodynamic performance of the technical object for each set of new simulation inputs; and the method further comprises:

selecting the set of new simulation inputs that leads to predicted aerodynamic performance parameters that meet a threshold;
deriving parameters from the simulation inputs to use in the design or operation of the technical object.

3. The method of claim 2, further comprising using the selected set of new simulation inputs as design parameters in manufacturing the technical object.

4. The method of claim 2, wherein the new simulation inputs to the neural network comprise a fixed geometry of the technical object with varying operating conditions, and the method further comprises using the selected set of new simulation inputs to generate operational limits for a technical object having the same geometry when in use.

5. The method of any preceding claim, wherein the relationship between the geometry of the at least one training technical object and the neural network input node locations comprises a geometric vector that represents both distance and direction between the spatial location of an input node and a closest point on the geometry of the technical object.

6. The method of any preceding claim, wherein the relationship between the geometry of the at least one training technical object and the neural network input node locations comprises a vector representing parameters of a parametric equation that defines an approximation to the surface of the technical object.

7. The method of any preceding claim, wherein the relationship between the geometry of the at least one training technical object and the neural network input node locations comprises a directional integrated distance between an input node of the neural network and the geometry of the technical object, wherein the directional integrated distance for each node comprises a plurality of values of a shortest distance between the input node location and a closest point on the geometry of the technical object in an angular range.

8. The method of any preceding claim, wherein the neural network is a graph neural network associated with a mesh having a plurality of cells such that the input nodes are associated with positions of the cells, wherein the mesh having been generated using a meshing tool to divide a space around the at least one training technical object into finite volumes, and wherein the relationship between the geometry of the at least one training technical object and the mesh comprises characteristics of the mesh cells associated with each input node.

9. The method of claim 8, wherein volumes of the mesh cells are provided to the graph neural network as node attributes while face surface area vectors and face centroids of the mesh cells are provided to the graph neural network as edge attributes, such that at least one filter in each input node can be adjusted based on the characteristics.

10. The method of any preceding claim, wherein using a loss function during training further comprises: training the network to minimise a residual loss $L_r = \mathcal{L}(F_{GT}, \hat{F}_r + \text{Upsample}(F_{LR}))$, where $F_{GT}$ is a corresponding ground truth, $\mathcal{L}$ is an arbitrary loss criterion, $\hat{F}_r$ is a predicted residual between a predicted flow variable and Upsample ($F_{LR}$), an upsampled, low resolution field .

11. The method of any preceding claim, wherein the new simulation inputs comprise one or more of:

   a new geometry;
   new boundary conditions;
   new operating conditions.

12. The method of claim 11, wherein the new geometry comprises the geometry of at least two technical objects having a geometric separation from each other, wherein training the neural network includes using a plurality of sets of encodings of pre-computed CFD outputs, each based on at least two training technical objects having a respective training geometric separation from each other, and wherein using a loss function that evaluates an error between the neural network output and the pre-computed CFD outputs includes:

   generating a plurality of first initial estimates of a flow field using existing flow data for each of the training technical objects, and combining the existing flow data based on the respective training geometric separation;
   calculating a plurality of residual fields between the first initial estimates and the CFD outputs; and
   evaluating an error between the neural network output and the residual fields to produce a trained neural network;

   and wherein using the trained neural network with new simulation inputs to generate as output predicted aerodynamic performances of the at least two technical objects further includes:

   generating a second initial estimate of a flow field using existing flow data for each of the at least two technical objects, and combining the existing flow data based on the geometric separation between them;
   using the trained neural network to predict a predicted residual field; and
   combining the predicted residual field with the second initial estimate to generate the predicted aerodynamic performances of the at least two technical objects.

13. The method of claim 12, wherein the neural network comprises a plurality of neural networks, the method further comprising:

   during the training, splitting the residual fields into a plurality of domains, each domain having an overlap region with at least one other domain;
   training a separate neural network of the plurality of neural networks using the residual fields for each domain;

   and wherein using the trained neural network with new simulation inputs to generate as output predicted aerodynamic performances of the at least two technical objects further includes:

   generating a third initial estimate of a flow field using existing flow data for each of the at least two technical objects, and combining the existing flow data based on the geometric separation between them;
   using the trained neural network to predict a predicted residual field for each of the plurality of domains; and
   combining the predicted residual field for each of the plurality of domains with the third initial estimate to generate predicted aerodynamic performances of the at least two technical objects.

14. A computer-readable medium having computer-executable instructions encoded thereon which, when executed by a computer, cause the computer to perform the method of any one of the claims 1 to 13.

15. A computer-readable medium having stored thereon a neural network produced by the method of any one of the claims 1 to 13.

101

104

105

102
**TRAINING PROCESS**

103
**TRAINED NEURAL NETWORK**

107

106
**PREDICTION PROCESS**

108

*FIG. 1*

*FIG. 2A*

*FIG. 2B*

FIG. 3A          FIG. 3B          FIG. 3C

EP 4 510 034 A1

*FIG. 4*

*FIG. 5B*

*FIG. 5A*

FIG. 6

FIG. 7

*FIG. 8*

FIG. 9

EP 4 510 034 A1

*FIG. 10*

*FIG. 11*

*FIG. 12*

*FIG. 13*

Europäisches
Patentamt

European
Patent Office

Office européen
des brevets

# EUROPEAN SEARCH REPORT

**Application Number**

EP 24 19 1204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/069740 A1 (DEEPMIND TECH LTD [GB]) 7 April 2022 (2022-04-07) <br> * abstract * <br> * page 1, paragraph 4-5 * <br> * page 7, paragraph 4-5 * <br> * page 9, paragraph 7 * <br> * page 15, paragraph 2-3 * <br> * page 23, paragraph 3 * <br> * page 26, paragraph 4-5 * <br> * page 28, paragraph 4-5 * <br> * page 31, paragraph 3 * <br> * page 32, paragraph 3 * <br> * page 33, paragraph 4-5 * <br> * page 35, paragraph 5 * <br> * page 42, paragraph 3 * <br> * page 44, paragraph 2 * <br> * figures 1-4,7-9 * <br> ----- | 1-15 | INV. <br> G06F30/23 <br> G06F30/27 <br> G06F30/28 <br> G06N3/04 <br> G05B13/04 <br> G06N3/08 <br> B64F5/60 <br> G05B13/02 <br><br> ADD. <br> G06F113/08 |
| X,P | LOH SHER EN JESSICA ET AL: "Finite Volume Features, Global Geometry Representations, and Residual Training for Deep Learning-based CFD Simulation", ARXIV.ORG, CORNELL UNIVERSITY LIBRARY, 201 OLIN LIBRARY CORNELL UNIVERSITY ITHACA, NY 14853, 24 November 2023 (2023-11-24), XP091660482, <br> * abstract * <br> * page 2, column 1, paragraph 3-6 * <br> * page 4, column 1, paragraph 2 - page 6, column 2, paragraph 1 * <br> * figures 2-6 * <br> * Algorithm 1 * <br> ----- <br> -/-- | 1-15 | **TECHNICAL FIELDS SEARCHED (IPC)** <br><br> G06F <br> G06N |

The present search report has been drawn up for all claims

| Place of search | Date of completion of the search | Examiner |
|---|---|---|
| Munich | 17 December 2024 | Sohrt, Wolfgang |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt
European
Patent Office
Office européen
des brevets

# EUROPEAN SEARCH REPORT

Application Number

EP 24 19 1204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/297267 A1 (LIANG LONG [US] ET AL) 7 November 2013 (2013-11-07) * abstract * * paragraph [0026] * * paragraph [0038] * * paragraph [0046] * * figures 3-4 * ----- | 1-15 | |

TECHNICAL FIELDS
SEARCHED        (IPC)

The present search report has been drawn up for all claims

| Place of search | Date of completion of the search | Examiner |
|---|---|---|
| Munich | 17 December 2024 | Sohrt, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 19 1204

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2024

| Patent document cited in search report | Publication date | Patent family member(s) | | Publication date |
|---|---|---|---|---|
| WO 2022069740 A1 | 07-04-2022 | CN | 116324795 A | 23-06-2023 |
| | | EP | 4205014 A1 | 05-07-2023 |
| | | JP | 7492083 B2 | 28-05-2024 |
| | | JP | 2023544175 A | 20-10-2023 |
| | | KR | 20230065343 A | 11-05-2023 |
| | | US | 2023359788 A1 | 09-11-2023 |
| | | WO | 2022069740 A1 | 07-04-2022 |
| US 2013297267 A1 | 07-11-2013 | EP | 2771837 A1 | 03-09-2014 |
| | | JP | 6049746 B2 | 21-12-2016 |
| | | JP | 2014532925 A | 08-12-2014 |
| | | US | 2013297267 A1 | 07-11-2013 |
| | | WO | 2013063433 A1 | 02-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FLORENT BONNET** ; **JOCELYN AHMED MAZARI** ; **PAOLA CINNELLA** ; **PATRICK GALLINARI**. AirfRANS: High Fidelity Computational Fluid Dynamics Dataset for Approximating Reynolds-Averaged Navier-Stokes Solutions. *NeurIPS*, 2022
- **JUNFENG CHEN** ; **ELIE HACHEM** ; **JONATHAN VIQUERAT**. Graph neural networks for laminar flow prediction around random two-dimensional shapes. *Physics of Fluids*, 2021, vol. 33 (12), 123607
- **FILIPE DE AVILA BELBUTE-PERES** ; **THOMAS ECONOMON** ; **ZICO KOLTER**. Combining differentiable PDE solvers and graph neural networks for fluid flow prediction. *International Conference on Machine Learning*, 2402-2411
- **FILIPE DE AVILA BELBUTE-PERES** ; **THOMAS ECONOMON** ; **ZICO KOLTER**. Combining differentiable 369 PDE solvers and graph neural networks for fluid flow prediction. *International Conference 370 on Machine Learning*, 2020, 2402-2411